Europäisches Patentamt

European Patent Office

Office européen des brevets

(19)

(11) **EP 1 569 402 A1**

(12) **EUROPEAN PATENT APPLICATION**

(43) Date of publication:
**31.08.2005 Bulletin 2005/35**

(51) Int Cl.⁷: $H04L\ 27/26$

(21) Application number: **04290523.2**

(22) Date of filing: **26.02.2004**

| | |
|---|---|
| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK** | (72) Inventors:<br>• **Van Bruyssel, Danny E.J.**<br>  **9140 Temse (BE)**<br>• **Schelstraete, Sigurd J.M.**<br>  **2900 Schoten (BE)** |
| (71) Applicant: **ALCATEL**<br>**75008 Paris (FR)** | (74) Representative: **Plas, Axel Ivo Michel et al**<br>**Alcatel Bell N.V.,**<br>**Francis Wellesplein 1**<br>**2018 Antwerpen (BE)** |

(54) **Digital subscriber line modem with bitloading using channel condition model**

(57)    A telecommunication arrangement with modems (MCO; MCPE) having a receiving module (URx; DRx) able to receive channels of signals via a communication line (LN). The arrangement preferably operates according to the xDSL protocol. The receiving module of each modem is associated to storage means (USN, DSN; LDN) storing a "channel condition model" corresponding to operational conditions of the channel, preferably to the "worst case". The channel condition model is determined by previously measured operational conditions of this channel and/or by a channel condition model managed externally to the modem, and which is stored in the storage means before the initialization of the modem. In different variants, the channel condition model is a model of the noise level, the signal-to-noise ratio, the actual or the maximum bitloading ($b_i$) per carrier of the channel and/or mathematical operations on these. The channel condition model is further updated at regular time intervals during initialization or showtime. The modem may be located at the Central Office (CO) or at the Customer Premises Equipment (CPE). The receiving module (URx) of the CO modem (MCO) may receive the channel condition model from the central office management device via a management interface. The channel condition model may also be transmitted from the central office management device to the receiving module (DRx) of the CPE modem (MCPE), and channel condition measurement information may even be fed back.

Fig 1

EP 1 569 402 A1

**Description**

The present invention relates to a telecommunication arrangement with a modem having a receiving module coupled to a controlling module, said receiving module is adapted to receive at least one channel via a communication line, said channel being adapted to transport data by means of signals with modulation having a bitload which is modifiable, said controlling module is adapted to modify the bitload used by said receiving module as a function of current measurements performed by the modem immediately prior to a current bitloading.

Such a telecommunication arrangement with a modem capable of operating at different bitloads/ datarates is generally known in the art. Therein, the bitload/ datarate used by the receiving module is based on current channel conditions measurements, being measurements at one particular point in time, generally immediately prior to the current bitloading.

The "bitload" is defined as following. If the modulation is BaseBand Modulation (BBM) or Single Carrier Modulation (SCM), the bitload corresponds to the number of information bits per modulation symbol, also called modulation or signaling time slot. If the modulation is Multi Carrier Modulation (MCM), the bitload corresponds to the set of numbers describing the number of information bits per modulation symbol for each carrier, e.g. corresponds to the array of bi as defined in ITU-T G.992.3 Section 8.5.

BaseBand Modulation (BBM) is a modulation type without first modulating the signal onto a carrier, e.g. Pulse Amplitude Modulation (PAM); Single Carrier Modulation (SCM) is a modulation type in which the signal is modulated onto a single carrier, e.g. Quadrature Amplitude Modulation (QAM), Carrierless AM-PM (CAP); and Multi Carrier Modulation (MCM) is a modulation type in which multiple carriers are used, e.g. Discrete MultiTone modulation (DMT). These modulation types are generally known in the art.

The process of determining a bitload is called "bitloading". This can be a determination of the complete bitload as in initialization, a determination of a part of the bitload as in "showtime" BitSwapping, e.g. as defined in ITU-T G. 992.1, or a determination of a part of the bitload or of the complete bitload, as in "Showtime" On Line Reconfiguration (OLR), e.g. as defined in ITU-T G.992.3.

"Initialization" (a.k.a. Training) is the state or time period immediately preceding "Showtime", during which signals are exchanged between the modems in order to prepare showtime, but in which no user data are being communicated. Showtime (a.k.a. Data Transmission State or Steady State) is the state during which user data are being communicated by the modems.

A channel condition is any characteristics of the channel. The channel being defined as starting at the interface where the to be transmitted user data is given as input to the modem, and ending at the interface where the received user data is given as output by the modem connected to the other end of the communication line. Therefore, the channel includes, on top of the communication line, following modem functional blocks, well known in the art: line interface, analog front end, analog-to-digital convertors, digital-to-analog convertors, transmit and receive filters, gain scalers, modulation/ demodulation, constellation encoding/ decoding, channel coding/ decoding, forward error correcting coding/ decoding, scramblers, CRC generation and verification, ... As such any parameter which can be measured in any of the functional blocks of the channel constitutes a channel condition. The channel condition measurement predominantly used in the prior art is the Signal-to-Noise Ratio (SNR) measured at the receiver, for MCM typically on each of the carriers.

In known telecommunication arrangements, a problem occurs in the modem on channels with fast changing noise conditions. If the noise environment changes drastically after startup, i.e. during the showtime, due for instance to crosstalk caused by a neighboring modem starting up, the bitload may need to be modified in order to adapt to the new conditions. In some cases, such processes (like BitSwapping or OLR) that adapt the bitload during showtime are not sufficient and a re-initialization may be needed. This interrupts the service and is disturbing to the customer.

In other words, the "traditional" bitloading cannot take into account sudden changes in noise environment. When changes are too high, on-line reconfiguration cannot cope and the only option is to shut down the connection en do a re-initialization. A re-initialization will always interrupt the service, even if it can be shorter than a full initialization.

To solve this problem, different solutions exist in the art.

It is first to be noted that, in a preferred embodiment of the present invention, the modem is an adaptive xDSL modem.

Such a modem is a modem which is part of a Digital Subscriber Line (DSL) capable of operating at different bitloads/ datarates. An Asymmetric Digital Subscriber Line (ADSL) modem or a Very high speed Digital Subscriber Line (VDSL) modem for instance belong to the adaptive xDSL modem type.

Most, but not all, of known solutions to the above problem are applicable to an adaptive xDSL modem.

A first known solution to limit the vulnerability of modems to fast increasing noise levels that could be absent at the time of initialization, is the adapt the bit allocation and/or datarates during operation (i.e. in showtime). In current multi-carrier modems the initial datarate and the initial bitload is determined based on the Channel SNR-per-carrier measured during initialization, which is only a snapshot in time corresponding to the current noise conditions. However, over the course of time (during showtime) the noise conditions on the loop can vary, requiring a different shape of bitload for the same datarate (with decreased SNR margin) or could even require a decrease of the datarate. For slow variation in the noise conditions, methods have been defined in ADSL and VDSL standards to adapt the bitload in both ways: bit swap, i.e. change of bitload without change in datarate, as for instance mentioned in ADSL ITU G.992.1, ADSL2 ITU G.992.3 and ANSI T1.424 MCM VDSL, and respectively Seamless Rate Adaptation (SRA), i.e. change of bitload with change in datarate, as for instance mentioned in ADSL2 ITU G.992.3. Both these methods are also called "On Line Reconfiguration" (OLR).

This first solution is good for slowly changing noise conditions. However, in some crosstalk scenarios, the noise condition varies fast, and the proposed solution is too slow to react in time to avoid bit errors and/or to avoid a re-initialization. The reason therefore is that crosstalk noise from a newly switched-on xDSL modem increases instantaneous.

A second known solution to limit the vulnerability of modems to fast increasing noise levels that could be absent at the time of initialization, is the use of an a-priori determined limitation to a certain maximum datarate. The level of limitation is determined by means outside the modem, but is communicated to the modem via a management interface before bitloading in initialization.

In modems using BaseBand Modulation (BBM) or Single Carrier Modulation (SCM) this second solution gives sufficient control. Indeed, in the case that the modems use a fixed bandwidth and an adaptive constellation size, the limitation to a maximum datarate will result in a limitation to a maximum number of bits per symbol (i.e. the PAM or QAM constellation size). Therefore, to an upper limit on the minimum required SNR (e.g. to sustain a desired Bit Error Rate (BER) of e.g. 1E-7 with a desired SNR margin of e.g. 6 dB). The limitation is chosen such that the minimum required SNR is lower than or equal to the expected "worst case" (i.e. lowest) SNR, occurring during "worst case" noise conditions. Modems implementing the ITU-T V.32-bis voiceband modem standard are examples of this case.

In the case that the modems use a fixed constellation size and an adaptive bandwidth (given a fixed transmit power), the limitation of the datarate will result in a limitation of the bandwidth, and therefore to an increase in transmit PSD level. The limitation is chosen such that the required transmit PSD level minus the fixed required SNR is higher than or equal to the expected "worst case" noise level, occurring during "worst case" noise conditions. Modems implementing the ITU SHDSL G.991.2 Recommendation are examples of this case.

It is further to be noted that modems implementing the ANSI T1.424 SCM VDSL standard are not rate-adaptive and are therefore having the concept of maximum datarate.

Moreover, in modems using Multi-Carrier Modulation (MCM), this second solution does not give sufficient control. Indeed, the a-priori limitation to a maximum datarate will result only in a limitation to a maximum the number of bits per MCM symbol, which is a limitation only on the SUM OF the number $b_i$ of bits per carrier, summed over all carriers used (i.e.

$$\sum_i b_i \leq \text{limit}$$
).

As it does not provide a limitation of the number of bits for each specific carrier (bi), it is possible that during initialization with low noise conditions, the modem determines a bitload which allocates a $b_i$ on some carriers which is too high, needing a required SNR higher than the "worst case" SNR on those carriers during fast increasing noise condition. The more the shape of the noise spectrum during initialization is differing from the shape of the fast increasing noise during operation, the higher the vulnerability, and the higher the likelihood of excessive BER or re-initialization. Modems implementing any of the known (up-to-date) ITU Recommendations ADSL ITU G.992.1, G.992.2, G.992.3, G.992.4, G.992.5 or VDSL ANSI T1.424 MCM standard are examples of this case.

It is to be noted that this second known solutions is available in almost all types of modems: baseband, single carrier, multi-carrier, ...

A third known solution to limit the vulnerability of modems to fast increasing noise levels that could be absent at the time of initialization, is the use of an a-priori determined (single number) limitation of the maximum constellation size to a certain maximum number of bits per constellation, i.e. PAM or QAM constellation size. The level of limitation is determined by means outside the modem, but is communicated to the modem via a management interface before bitloading in initialization.

This third solution is identical to the above second solution and gives sufficient control in modems using BaseBand Modulation (BBM) or Single Carrier Modulation (SCM).

However, in modems using Multi-carrier Modulation (MCM) this third solution does not give sufficient control. Indeed, the a-priori limitation to a single number maximum number of bits per constellation (i.e. max$b_i \leq$ limit), e.g. the G.992.1 limit that is called BIMAX, does not provide a sufficient limitation of the number of bits for each specific carrier (bi). It only limits the $b_i$ on the carriers with the largest constellations, and these carriers are not necessarily the carriers that are vulnerable to fast changing noise levels. Also carriers with smaller constellations could be affected by fast changing noise levels. In other words, a max $b_i$ acts on carriers with large SNR values during initialization, which do not coincide with carriers with large SNR variation during showtime.

Modems implementing any of the known (up-to-date) ITU Recommendations ADSL ITU G.992.1, G.992.2, G.992.3, G.992.4, G.992.5 and VDSL ANSI T1.424 MCM standard are non-perfect examples of this case. The BIMAX is fixed during the design phase of the modem transmitter, and not controllable over a management interface.

It is to be noted that this third known solutions is available in almost all types of modems: baseband, single carrier, multi-carrier, ...

A fourth known solution to limit the vulnerability of modems to fast increasing noise levels that could be absent at the time of initialization, is the use of an a-priori determined (single number) Target SNR margin. In this solution, the noise level assumed during initialization for determining the datarate, equals the noise level measured during the current conditions of initialization but increased with a certain factor called "Target SNR margin". The level of the target SNR margin is determined by means outside the modem, but is communicated to the modem via a management interface before bitloading in initialization. Typically the target SNR margin is chosen such that it is higher or equal to "worst case" noise level minus the best case noise level. By doing so, the assumed noise level is always higher than the "worst case" noise level. Again this solution is available in almost all types of modems: baseband, single carrier, multi-carrier, ... Examples of such modems are respectively, modems implementing ITU SHDSL G.991.2 Recommendation, respectively ANSI T1.424 SCM VDSL standard, and respectively ITU Recommendations ADSL G.992.x up-to-date or ANSI T1.424 MCM VDSL standard. This fourth known solution is the most used today for ADSL modems.

It is to be noted that the term "worst case" is used as a short hand. It does not necessary mean to the "worst case" ever, e.g. over infinite time, or over all lines of the complete network. It corresponds to that case of channel conditions having a predetermined acceptable likelihood of occurrence such that an operator is deeming this acceptable, e.g. acceptable stability of the link over a certain given time period, or for a subset of the network.

This fourth solution is the most used at the present time. However, it is not suited for some situations as mentioned below.

This fourth known solution is not suited for noise types with fast increasing noise levels, which remain stable at a high level afterwards (for a non-negligible time), e.g. crosstalk rising from the switching-on of an xDSL system on another pair in the same cable. For this type of noise, it is clear that the initialization/ re-initialization could take place during the "worst case" noise conditions. Taking a high target SNR margin on top of these "worst case" noise levels, is unnecessary and leads to an excessive loss of datarate.

This is for instance the case of a twisted pair cable with ADSL links, but where the ADSL modems are not yet switched-on by their users. Then, the ADSL crosstalk level in the cable is absent. The noise level will be equal to the background noise level. The first ADSL modem that switches-on will see this background noise level during initialization. However, the crosstalk level will increase with each new ADSL modem that is switched on. When during operation of this first link, the number of users increases, e.g. from 1 to 50, the channel crosstalk will increase to its worst case maximum. Table 1 gives approximate numbers for the increase of noise level $\Delta$ when the noise evolves from a background noise of -140 dBm/Hz to a level corresponding with a Far-End CrossTalk (FEXT) of 50 ADSL disturbers:

Table 1

| Looplength 0.4 mm | Noise level increase $\Delta$ [dB] (approx.) | G.992.5 Downstream rate [Mbps] with 6 dB SNR margin in SELF XT (approx.) |
|---|---|---|
| 1000 m | 40 | 17 |
| 2000 m | 30 | 13 |
| 3000 m | 18 | 6 |
| 4000 m | 7 | 3 |

With the target SNR margin solution, the operator will have to assign a large target SNR margin at least equal to this noise level increase, in order for this first user to have a stable operation, and to withstand the noise increases. As can be seen, the SNR margin that has to be taken for stable operation increases for larger offered datarates.

For a user connecting when all other (e.g. 49) users are already on line, the noise is already at its maximum and will not increase any further. Taking a large SNR margin is not necessary in this case. However, as the operator is not aware of the order in which the users are switching-on, he has to assign one target SNR margin for all users. Therefore this large target SNR margin is assigned as well to the last user(s). As a consequence, the last user(s) will experience an excessive datarate loss. As an example, for 3000 m, the SNR margin to be taken is 18 dB. This is 12 dB higher than the usual 6 dB as shown in the Table 1. A loss of 12 dB corresponds to 4 bit per carrier. Over a 1 MHz usable bandwidth, this corresponds to a datarate loss of 4 Mbps, resulting in a reduction of the datarate to 2 Mbps.

It is also not suited for impulsive noise types, i.e. fast increasing and decreasing noise of very short duration. Due to the very short duration, it has negligible influence on the noise measurement result during initialization. The measurement will only indicate the average noise power level over the full measurement period, corresponding with the stationary noise component and not the "worst case" peak power level during the impulse noise. As impulsive noise and stationary noise come from different independent sources, taking a SNR margin with respect to the stationary component is a problematic solution to cope with impulsive noise.

It is also not suited for noise types of short duration, i.e. with a duration that is shorter than the duration of the noise measurement during initialization, e.g. < 1 sec. The measurement will only indicate the average noise power level over the full measurement period that somewhat influence the measurement result, and not the "worst case" peak power level during the noise with short duration. This case is a noise type that falls in between the two above noise types and, as a consequence, its disadvantages are a mixture of the disadvantages of the two above cases as well.

On the other hand, this fourth solution is suited for fast small changes in actual noise levels per carrier, in such a way that the loss in datarate is then still acceptable.

It is also suited for slow but somewhat larger changes in actual noise levels per carrier bit with still a small change in average noise level, e.g. due to temperature effects. In this case, the On Line Reconfigurations can adapt the bit loading with bitswap, before the SNR margin per carrier drops below zero. However, the average SNR margin will still decrease slowly. As long as the change in average noise level is small, the target SNR margin can be kept acceptable.

Modems implementing any of the known (up-to-date) ITU Recommendations ADSL ITU G.992.1, G.992.2, G.992.3, G.992.4, G.992.5 and the VDSL ANSI T1.424 MCM standard are examples of this case.

A fifth known solution to limit the vulnerability of modems to fast increasing noise levels that could be absent at the time of initialization, is the use of an a-priori determined model of the "worst case" noise level, occurring during "worst case" noise conditions, which is fixed in a standard or some other design document, and therefore is fixed in the equipment. This solution is known only in the domain of datarate-adaptive ITU SHDSL G.991.2 modems, where the model of the expected "worst case" noise level is fixed in this ITU standard (see for instance G.991.2 Table A-13 & Table B-14). This is possible because of the deployment method of Symmetric DSL or SHDSL, using fully overlapped spectra in downstream and upstream, which makes that the self Near End-CrossTalk (NEXT) from SHDSL systems working at the same rate is the dominant crosstalk, higher than the crosstalk from any other xDSL type with the same power. The "worst case" noise model is not communicated to the modem via a management interface before bitloading in initialization, only the enabling of this solution is controlled over the management interface.

The problems to apply this fifth known solution, of using an a-priori model of the "worst case" noise level fixed in a standard, to multi-carrier modems are the following:

- The use of an a-priori model is only defined in ITU SHDSL G.991.2 standard, but not for ADSL modems; and
- SHDSL describes only the use of an a-priori model that is a standardized, fixed, non-programmable model, and which can only be disabled or enabled.

This fifth solution is thus not suited for ADSL. Indeed, unlike for SHDSL, for which its own self-crosstalk determines the worst noise conditions because of the use of fully overlapped spectra, the FDM architecture of ADSL is such that the ADSL self-crosstalk is often much lower than the crosstalk from other xDSL. Due to this dependence on the other xDSL present in a cable or communication line, and the varying types of xDSL used in particular networks, a single a-priori model is not suited.

An object of the present invention is to provide a telecommunication arrangement with a modem of the above known type but wherein the initial datarate and initial bitload are determined such that an acceptable stability of operation over an extended time is obtained, at datarates which are as high as possible. The vulnerability of modem to fast increasing noise levels that could be absent at the time of initialization is hereby limited.

According to the invention, this object is achieved due to the fact that said controlling module is further adapted to also modify the bitload used by said receiving module as a function of a bitloading channel condition model that is independent of the current measurements.

In this way, the bitload used by said receiving module is determined by operational conditions of the channel and can thereby be optimized for each particular channel.

The known fifth solution mentioned above seems to be the closest prior art, but is not used in current ADSL and VDSL. The present invention uses a model that is programmable and not fixed in the standard, and therefore becomes suited for FDM xDSL modems, e.g. ADSL and/or VDSL.

As already mentioned, the known fourth solution mentioned above is the most used in current ADSL and VDSL. Although prior art is trying to solve the same problem, it can not be considered as close prior art, as the algorithmic method is completely different. Further the present invention does not produce an excessive loss of datarate to guarantee stability.

In a preferred embodiment, the present invention is characterized in that said bitloading channel condition model is a function of at least one measured bitloading channel condition model previously obtained through measurements by said modem.

The modem is thus less likely to re-initialize when a dominant noise appears on the communication line because this noise has generally been identified at least once during a previous measurement. A previous measurement can be a measurement prior to the bitloading in a previous initialization or can be a measurement prior to the previous (partial or complete) bitloading in showtime, or can be a measurement prior to the current measurements (i.e. which are immediately prior to the current bitloading). Furthermore, when performing bitloading, taking into account a previous history of channel conditions or measurements, in one form or another, does not necessarily require a full history of all previous channel conditions or measurements.

In a variant, the embodiment of the present invention is characterized in that said measured bitloading channel condition model is model of the noise level of said channel.

In another variant, the embodiment of the present invention is characterized in that said measured bitloading channel condition model is model of the signal-to-noise ratio of said channel.

The channel condition model may for instance be provided as a table of noise or SNR levels measured at equidistant frequency points, possibly corresponding with each Multi-Carrier Modulation (MCM) carrier frequency; or by a table of noise or SNR levels measured at equidistant or non-equidistant frequency points, where the information on other frequency points is extracted via a predetermined interpolation/ extrapolation method, or as a table of parameters of a predefined analytical formula modeling the noise or SNR levels, or as a table of parameters to be used in a predefined algorithmic method modeling the noise or SNR levels.

In still other variants, the embodiment of the present invention is characterized in that said measured bitloading channel condition model is model of the actual bitload of said channel.

The channel condition model may for instance be provided as a table of values of the actual bitload at equidistant carriers, possibly corresponding with each Multi-Carrier Modulation (MCM) carrier; or by a table of values of the actual bitload at equidistant or non-equidistant carriers, where the information on other carriers is extracted via a predetermined interpolation/ extrapolation method, or as a table of parameters of a predefined analytical formula modeling the values of the actual bitload, or as a table of parameters to be used in a predefined algorithmic method modeling values of the actual bitload.

Also in another characterizing variant of the present invention, said measured bitloading channel condition model is model of a mathematical function of at least one parameter of said channel.

Such a mathematical operation may for instance be an analytical formula or algorithmic descriptions.

It is further obvious that the channel condition model may also be determined by any combination of the proposed variants of the invention.

A further characterizing embodiment of the present invention is that said measured bitloading channel condition model is model of the "worst case" channel condition of at least one parameter of said channel.

In a conservative approach, the modem may for instance use the worst condition it has ever encountered. The modem may also take an average between the current condition and the worst condition ever encountered. In a less conservative approach, this "worst case" corresponds for instance with channel conditions having a predetermined acceptable likelihood of occurrence. In general the modem may apply linear or nonlinear mathematical functions, to current condition and/or stored previous conditions, and apply a dynamic system with finite or infinite memory effect.

The modem may for instance apply "ageing", whereby the worst-case conditions gradually loose importance in the course of subsequent bitloadings. In that way, one-time noise events or very rare events will not impact the modem forever. In some cases, the time of day at which the update is performed may play a role. An advanced implementation could even take this into account.

Another characterizing embodiment of the present invention is that said bitloading channel condition model is a function of a first managed channel condition model, which is a function of a second managed channel condition model that is transferred to the modem by a management device external to the modem.

In this way, the modem can execute bitloading, taking into account a first managed channel condition model. This first managed channel condition model is not autonomously determined by the modem through measurements by the modem itself. This first managed channel condition model is a function of a second managed channel condition model, that is determined by an entity external to the modem and that is communicated to the modem prior to bitloading.

The second managed channel condition model can be communicated to the modem via a local management interface (e.g. ITU-T G.997.1 Q or T/S interface) and/or via the line interface (e.g. ITU-T G.992.3 U interface) in initialization when managed from the far-end side.

In different characterizing variants of the present invention, saidmanaged channel condition model may be model of the noise level of said channel and/or model of the signal-to-noise ratio of said channel and/or model of a mathematical function of at least one parameter of said channel.

The managed channel condition model may for instance be provided as a table of noise or SNR levels measured at equidistant frequency points, possibly corresponding with each Multi-Carrier Modulation (MCM) carrier frequency; or by a table of noise or SNR levels measured at equidistant or non-equidistant frequency points, where the information on other frequency points is extracted via a predetermined interpolation/ extrapolation method, or as a table of parameters of a predefined analytical formula modeling the noise or SNR levels, or as a table of parameters to be used in a predefined algorithmic method modeling the noise or SNR levels.

In another variant, the embodiment of the present invention is characterized in that said second managed channel condition model is model of the actual bitload for each carrier of modem using Multi Carrier Modulation.

Still in another variant, the embodiment of the present invention is characterized in that said second managed channel condition model is model of the maximum allowed bitload for each carrier of modem using Multi Carrier Modulation (MCM).

The managed channel condition model may for instance be provided as a table of values of the actual or maximum allowed bitload at equidistant carriers, possibly corresponding with each Multi-Carrier Modulation (MCM) carrier, or by a table of values of the actual or maximum allowed bitload at equidistant or non-equidistant carriers, where the information on other carriers is extracted via a predetermined interpolation/extrapolation method, or as a table of parameters of a predefined analytical formula modeling the values of the actual or maximum allowed bitload, or as a table of parameters to be used in a predefined algorithmic method modeling values of the actual or maximum allowed bitload.

Further characterizing embodiments of the present invention are that said controlling module comprises modem storage means adapted to store said bitloading channel condition model as a function of said measured bitloading channel condition model and as a function of said first managed channel condition model, and that said management device has management storage means adapted to store said second managed channel condition model.Yet another characterizing embodiment of the present invention is that said bitloading channel condition model is updated during an initialization phase of the modem.

Alternatively, another characterizing embodiment of the present invention is that said bitloading channel condition model is updated while user data is communicated.

Preferably, said modulation is multi carrier modulation (MCM). However, in other characterizing variants of the present invention, said modulation may be single carrier modulation (SCM) or baseband modulation (BBM).

In other words, although the characterizing features of the present invention allow obtaining the highest performances for datarate-and bitload- adaptive Multi Carrier Modulation (MCM) modems, they are also applicable to datarate-adaptive BaseBand modems, datarate-adaptive Single Carrier Modulation (SCM) modems and bitload-adaptive Multi Carrier Modulation (MCM) modems deployed at fixed datarate.

Another characterizing embodiment of the present invention is that the modem is located at the Central Office part of the telecommunication arrangement, that the receiving module of said modem is an upstream receiving module coupled to the controlling module of said modem, and that the modem storage means of said controlling module is adapted to store a bitloading channel condition model that is an upstream bitloading channel condition model.

Again another characterizing embodiment of the present invention is that the management device is also located at the Central Office part of the telecommunication arrangement and is coupled to said modem, and that said management device has upstream management storage means adapted to store the second managed channel condition model that is a second upstream managed channel condition model.

Also another characterizing embodiment of the present invention is that the modem is located at the Customer Premises Equipment part of the telecommunication arrangement, that the receiving module of said modem is a downstream receiving module coupled to the controlling module of said modem, and that the modem storage means of said controlling module is adapted to store a bitloading channel condition model that is a downstream bitloading channel condition model.

In this way, the present invention applies to any modem located at the Central Office (CO) of the telecommunication arrangement, as well as to any modem located at the Customer Premises Equipment (CPE) thereof.

Again another characterizing embodiment of the present invention is that the management device is also located at the Customer Premises Equipment part of the telecommunication arrangement and is coupled to said modem, and that said management device has downstream management storage means adapted to store the second managed channel condition model that is a second downstream managed channel condition model.

An alternative characterizing embodiment of the present invention is that the management device is located at the Central Office part of the telecommunication arrangement and is coupled to said modem located at the Customer Premises Equipment via said communication line, and that said management device has downstream management storage means adapted to store said second managed channel condition model that is a second downstream managed channel condition model.

In this way, the second managed channel condition model to be used by the Customer Premises Equipment modem, can be the one that is communicated to the Customer Premises Equipment modem via the line interface in initialization. This allows this second managed channel condition model, to be determined and managed by the Central Office management device. Therefore, this method has the advantage that the second managed channel condition model does not need to be fixed at the time of production of the CPE equipment, nor that it needs intervention of the customer. The operator controlling the Central Office can control this second managed channel condition model in a central and flexible way.

In a preferred embodiment, the present invention is characterized in that said controlling module of said modem is adapted to provide feedback information of the downstream bitloading channel condition model stored in the modem storage means to said management device via said communication line.

In this way, the downstream managed channel condition model can be updated using this feedback information or a function thereof.

In another embodiment, the present invention is characterized in that said controlling module of said modem is adapted to provide feedback information of the upstream bitloading channel condition model stored in the modem storage means to said management device.

In this way, the upstream managed channel condition model can be updated using this feedback information or a function thereof.

Further characterizing embodiments of the present telecommunication arrangement including one or more modems with a receiving module are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

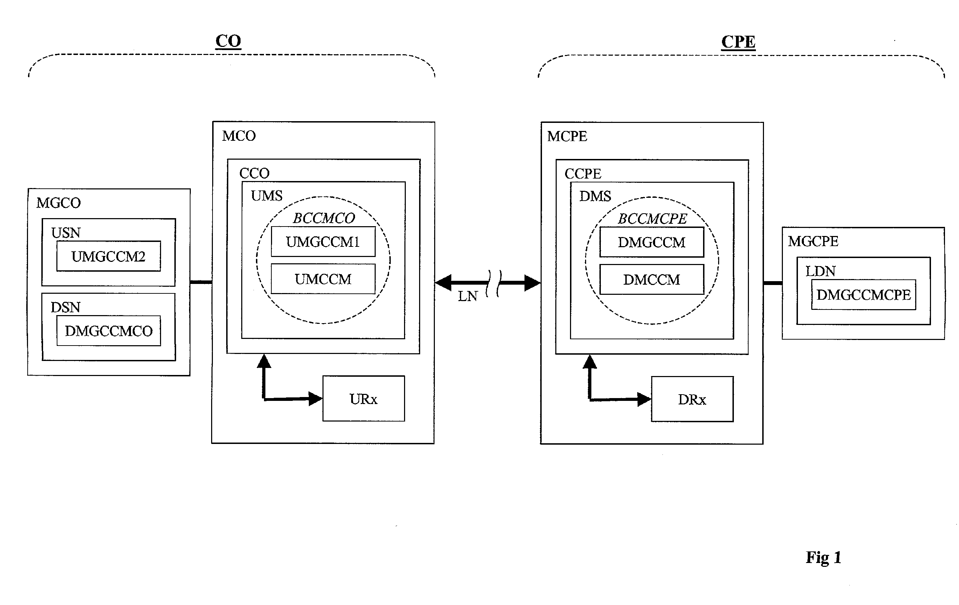

The above and other objects and features of the invention will become more apparent and the invention itself will be best understood by referring to the following description of an embodiment taken in conjunction with the accompanying drawings wherein the single Figure represents a telecommunication arrangement including modems according to the invention.

The telecommunication arrangement shown on the Figure is preferably a Digital Subscriber Line xDSL telecommunication arrangement comprising a communication line LN that interconnects a Central Office CO to a Customer Premises Equipment CPE. Either CO or CPE, or both, are provided with at least one modem MCO and MCPE respectively, these modems being preferably of the type adaptive xDSL modem capable of operating at different datarates and bitloads. Each modem MCO/ MCPE comprises a respective receiving module URx/ DRx adapted to receive channels transporting data by means of signals with modulation having a bitload which is modifiable. The direction of datatransmission from the modem MCO located at the Central Office to the modem MCPE located at the Customer Premises, is called the Downstream direction. Upstream is the direction of datatransmission from the modem MCPE located at the Customer Premises to the modem MCO located at the Central Office.

The "bitload" is defined as following. If the modulation is BaseBand Modulation (BBM) or Single Carrier Modulation (SCM), the bitload corresponds to the number of information bits per modulation symbol, also called modulation or signaling time slot. If the modulation is Multi Carrier Modulation (MCM), the bitload corresponds to the set of numbers describing the number of information bits per modulation symbol for each carrier, e.g. corresponds to the array of bi as defined in ITU-T G.992.3 section 8.5.

BaseBand Modulation (BBM) is a modulation type without first modulating the signal onto a carrier, e.g. Pulse Amplitude Modulation (PAM); Single Carrier Modulation (SCM) is a modulation type in which the signal is modulated onto a single carrier, e.g. Quadrature Amplitude Modulation (QAM), Carrierless AM-PM (CAP); and Multi Carrier Modulation (MCM) is a modulation type in which multiple carriers are used, e.g. Discrete MultiTone modulation (DMT). These modulation types are generally known in the art.

The process of determining a bitload is called "bitloading". This can be a determination of the complete bitload as in initialization, a determination of a part of the bitload as in "showtime" Bitswapping, e.g. as defined in ITU-T G. 992.1, or determination of a part of the bitload or of the complete bitload as in "showtime" On Line Reconfiguration (OLR), e.g. as defined in ITU-T G.992.3.

"Initialization" (a.k.a. Training) is the state (or time period) immediately preceding "Showtime", during which signals are exchanged between the modems in order to prepare showtime, but in which no user data are being communicated. Showtime (a.k.a. Data Transmission State or Steady State) is the state during which user data are being communicated by the modems. The terms "Initialization" and "Showtime" are also used in ITU-T G.992.1 and G.992.3.

The receiving module URx/ DRx of a modem MCO/ MCPE, respectively of the CO/ CPE, is coupled to a controlling module CCO/ CCPE able to modify the bitload used by the associated receiving module as a function of current measurements of channel conditions performed by the modem MCO/ MCPE immediately prior to a current bitloading. Additionally, the controlling module CCO/ CCPE is also able to modify this bitload as a function of a bitloading channel condition model BCCMCO/BCCMCPE that is independent of the current measurements.

A channel condition is any characteristics of the channel. The channel being defined as starting at the interface where the to be transmitted user data is given as input to the modem, and ending at the interface where the received user data is given as output by the modem connected to the other end of the communication line LN. Therefore, the channel includes, on top of the communication line, following modem functional blocks, well known in the art: line interface, analog front end, analog-to-digital convertors, digital-to-analog convertors, transmit and receive filters, gain scalers, modulation/demodulation, constellation encoding/decoding, channel coding/decoding, forward error correcting coding/decoding, scramblers, CRC generation and verification, ... As such any parameter which can be measured in any of the functional blocks of the channel constitutes a channel condition. The channel condition measurement predominantly used in the prior art is the Signal-to-Noise Ratio (SNR) measured at the receiver, for MCM typically on each of the carriers.

It is to be noted that in this description, the suffixes CO and CPE of some labels generally respectively refer to the Central Office CO and the Customer Premises Equipment CPE to which the corresponding item belongs.

In the present telecommunication arrangement, the bitloading channel condition model BCCMCO/ BCCMCPE independent of the current measurements is either a function of one or more measured bitloading channel condition models UMCCM/ DMCCM previously obtained through measurements by the modem, a function of a first managed channel condition model UMGCCM1/ DMGCCM, which is itself a function of a second managed channel condition model UMGCCM2/ DMGCCMCO, DMGCCMCPE transferred to the modem MCO/ MCPE by a management device MGCO/ MGCPE coupled, but external, to the modem, prior to the current bitloading, or a combination of both.

In more detail, the controlling module CCO/ CCPE, respectively of the CO/ CPE, comprises modem storage means UMS/ DMS adapted to store the bitloading channel condition model BCCMCO/ BCCMCPE as a function of measured bitloading channel condition models UMCCM/ DMCCM previously obtained through measurements and as a function of the first managed channel condition model UMGCCM1/ DMGCCM that is function of a second managed channel condition model UMGCCM2/ DMGCCMCO, DMGCCMCPE. The management device MGCO/ MGCPE has management storage means USN, DSN/ LDN adapted to store the second managed channel condition model UMGCCM2, DMGCCMCO/ DMGCCMCPE.

On the one hand, the receiving module of the modem MCO located at the Central Office CO part of the telecommunication arrangement is an upstream receiving module URx coupled to the controlling module CCO of the modem MCO. The modem storage means UMS of the controlling module CCO is able to store a bitloading channel condition model that is an upstream bitloading channel condition model BCCMCO. Preferably, the management device MGCO is also located at the Central Office CO and has an upstream management storage means USN for storing the second managed channel condition model that is a second upstream managed channel condition model UMGCCM2. The measured bitloading channel condition model and the first managed channel condition model of this upstream bitloading channel condition model BCCMCO are respectively upstream measured bitloading channel condition model UMCCM and upstream first managed channel condition model UMGCCM1.

On the other hand, the receiving module of the modem MCPE located at the Customer Premises Equipment CPE part of the telecommunication arrangement is a downstream receiving module DRx coupled to the controlling module CCPE of the modem MCPE. The modem storage means DMS of the controlling module CCPE is able to store a bitloading channel condition model that is a downstream bitloading channel condition model BCCMCPE. The measured bitloading channel condition model and the first managed channel condition model of this downstream bitloading channel condition model BCCMCPE are respectively downstream measured bitloading channel condition model DMCCM and downstream first managed channel condition model DMGCCM.

In a first alternative arrangement, the management device MGCPE is also located at the Customer Premises Equipment CPE and is directly coupled to the modem MCPE. The management device MGCPE then has downstream management storage means LDN for storing the second managed channel condition model that is a second downstream managed channel condition model DMGCCMCPE.

In a second alternative arrangement, the management device MGCO is located at the Central Office CO and is coupled to the modem MCPE located at the Customer Premises Equipment CPE via the communication line LN. The management device MGCO then has downstream management storage means DSN for storing the second managed channel condition model to be used by the CCPE as a second downstream managed channel condition model DMGCCMCO.

It is to be noted that the controlling module CCPE of the modem MCPE may provide feedback bitload information of the downstream bitloading channel condition model BCCMCPE stored in the modem storage means DMS to the management device MGCO via the communication line LN.

Alternatively, the controlling module CCO of the modem MCO may provide feedback information of the upstream bitloading channel condition model BCCMCO stored in the modem storage means UMS to the management device MGCO.

Some of the various possible operations of the present xDSL telecommunication arrangement will be described hereafter.

One possible method of operation is where the modem bitloading function is using a channel condition model based on previously obtained measurements. For this history based bitloading method, it is to be noted that when performing bitloading, a previous history of the channel conditions or measurements is taken into account in one form or another. This does not require a full history of all previous channel conditions or measurements.

In this history based method, in general, provisions can be made to account for possible dominant disturbers that are not present at the time of initialization. The modem can determine from the history that there is a probability of a high disturbance appearing at certain frequencies, even if that disturbance is not present at the time of initialization. The affected frequencies can preventively be given a lower value of the bitload at the corresponding carriers (or higher SNR margin) than the measured SNR would allow. This leads to a bitload that may look conservative at the time of initialization, but that will prevent re-initializations later on. The stability of the connection is therefore improved.

A second method of operation, is where the modem bitloading function is using a channel conditions model which is managed by an management device external to the modem, e.g. the management station which is used by the xDSL access provider to configure, monitor and maintain the network of xDSL lines. Generally, the managed channel condition model is an a-priori model determined by this external management entity and is communicated to the modem prior to bitloading. Because it is communicated, the model does not need to be fixed in an equipment Standard (as in ITU-T G.991.2), but can be made programmable. The channel condition model can be communicated to the modem via a local management interface (e.g. G.997.1 Q interface at the CO side or T/S interface at the CPE side) and/or via the line interface (e.g. G.992.3 U interface) during initialization when managed from the far-end side. This communication over the line interface can be done by using ITU-T G.994.1 handshake mechanism as the first states of initialization. This by using the Non Standard Information Field (NSIF) in G.994.1 or via a field defined in a future update of the G.994.1 standard. In particular, the communication from the CO to the CPE can use the G.994.1 CL message.

In a preferred specific embodiment, the channel condition model is an a-priori model of the "worst case" noise level.

A first variant of this embodiment is the use of an a-priori model of the "worst case" noise level that is not fixed in a Standard, but that is programmable and communicated to the modem, e.g. the central modem MCO, before the start of initialization. The model can be different in downstream and in upstream. The model in the upstream direction is communicated to the central modem MCO via a management interface and is used locally in the central modem MCO. The model in the downstream direction is first communicated to the central modem MCO via the management interface and is then communicated by the central modem MCO to the remote modem MCPE in one of the first states of initialization (e.g. using ITU-T G.994.1 handshake), before the determination of the downstream bitload, and is used by the remote modem MCPE.

During initialization, both receivers URx and DRx use their respective models of the "worst case" noise level together with the measured received signal levels to determine the "worst case" Channel Signal-to-Noise Ratio SNR, e.g. in Multi-Carrier Modulation MCM modems the SNR-per-carrier, in order to determine the initial datarate and the initial bitload.

This a-priori "worst case" noise model, includes information to determine the assumed "worst case" noise level:

- In general for any type of modem: over the complete frequency range or over parts of the frequency range, possibly including also frequency ranges outside the used passband, and
- In particular for MCM modems: information could be conveyed in a per MCM carrier format.

The description of the "worst case" noise model could take various formats. Some examples are:

- Analytical formula defined in a Standard, and for which only the parameters are communicated to the modem;
- Algorithmic descriptions defined in a Standard, and for which only the parameters are communicated to the modems;
- Table of noise levels at equidistant frequency points, possibly corresponding with each MCM carrier frequency; or
- Table of noise levels at equidistant or non-equidistant points, where the information on other frequency points is to be extracted via some predetermined inter/extrapolation method.

A combination of above formats could be useful. As Near End Crosstalk (NEXT) are approximately loop length independent, they can be modeled and communicated as a table of noise levels in absolute numbers (e.g. in dBm/Hz). For Far End Crosstalk (FEXT), the approach of the analytical formula with parameters seems better suited. The analytical formula could be a Product of a Frequency Domain (PSD) profile of an equivalent disturber with a model of the FEXT coupling function. This FEXT coupling function model could be as the equation H2(f) in ETSI TS 101 388 V1.3.1 (2002-02) section 5.3.2, and the communicated parameters being the constants used in this formula (reference frequency f0, reference length L0, constant Kxf or a combination thereof) The looplength L and amplitude of the transmission function ST0 can be determined by the receiving modem and hence don't need to be communicated. The frequency domain PSD profile of the reference disturber is also a parameter in the analytical formula and needs to be communicated. It could for example take the format as a table of PSD levels and breakpoints as in ETSI TS 101 388 V1.3.1 (2002-02) section 5.3.4.1.1.

It is to be noted that the term "worst case" is used in this description as a short hand. It does not necessary mean the "worst case" ever, e.g. over infinite time or over all lines of complete network. It rather corresponds to that case of noise conditions that an operator finds acceptable, e.g. acceptable stability of the link over a certain given time period, for a subset of the network, acceptable likelihood of occurrence, e.g. ETSI FA noise model in ETSI TS 101 388 V1.3.1 (2002-02) section 5.3.4.1.

In a second variant, both receivers use their respective models of the "worst case" noise level during showtime, i.e. after the initialization phase, together with continuously measured received signal levels to determine continuously the "worst case" Channel SNR, e.g. in MCM modems the SNR-per-carrier, as to determine the need for adapting the bit loading and/or datarates.

It is to be noted that for xDSL lines the attenuation and thus the signal levels on a twisted pair are expected to have only slow variations. Therefore, the known slow methods such as ITU-T G.992.1 and G.992.3 bitswapping and/or ITU-T G.992.3 Seamless Rate Adaptation (SRA), i.e. a form of ITU-T G.992.3 On Line Reconfiguration, regain their relevance when the worst case channel SNR is used instead of the current SNR.

It is also to be noted that the known prior art ITU-T G.991.2 SHDSL model does not adapt the bitload during showtime.

In a third variant, the a-priori noise model does not necessarily correspond with the "worst case" noise level, and during initialization, both receivers combine the noise levels obtained from their respective noise models together with the noise levels measured during the current conditions of initialization. This allows obtaining, together with the measured received signal levels, an equivalent Channel SNR, e.g. in MCM modems the SNR-per-carrier, in order to determine the initial datarate and the initial bitload. The two noise levels can be combined by any method, such as addition of powers, maximum level of the two, ...

In an alternative of this third variant, both receivers combine during showtime the noise levels obtained from their respective noise models, together with the noise levels continuously measured during showtime and with the continuously measured received signal levels. This allows obtaining continuously the equivalent Channel SNR, e.g. in MCM modems the SNR-per-carrier, as to determine the need for adapting the bit allocation and/or datarates.

In another alternative of this third variant, both receivers combine the noise levels obtained from three sources: the current measurements (during initialization or continuously during showtime), the history based channel condition model and the managed channel condition model. Together with the continuously measured received signal levels, it allows obtaining continuously the equivalent Channel SNR, e.g. in MCM modems the SNR-per-carrier, as to determine the need for adapting the bit allocation and/or datarates.

Here again, the known slow methods such as ITU-T G.992.1 and G.992.3 bitswapping and/or ITU-T G.992.3 Seamless Rate Adaptation (SRA), i.e. a form of ITU-T G.992.3 On Line Reconfiguration (OLR), are suited for this purpose because the signal levels on a twisted pair are expected to have only slow variations.

In still another variant, the a-priori model is based on the Signal-to-Noise Ratio SNR level instead as on the noise level. This variant can be applied to all xDSL modems.

Again in another variant, the a-priori model is a model for the maximum allowed number of bits for each carrier (bi_max(i)) instead of the noise level. This variant is however reserved to be applied to MCM xDSL modems. Current Standards ITU-T G.992.1 and G.992.3 only have a single number BIMAX for all carriers, controlled by the remote transmitter, but which is not controllable over the management interface at central modem.

Alternatively, the a-priori model may be a model for the actual bit loading for each carrier instead as for the noise level. This variant also is reserved to be applied to MCM xDSL modems. Current Standards ITU-T G.992.1 and G.992.3 only have bitloading controlled by the receiver, but which is not controllable over the management interface at central modem.

It is to be noted that these last three variants are also applicable to channels with fast changing receive signal levels, e.g. wireless transmission.

In a further variant within this second method of operation using a managed channel conditions model, feedback information can be given by the CPE and the CO to the central management device. A certain number of current standards already define some information which is send back by the CO management entity, e.g. the dual ended line test parameters as in ITU-T G.992.3 section 8.12.3. or the performance monitoring functions in ITU-T G.997.1, section 7.2 Performance Monitoring Functions. This information can be used to apply feedback to the managed channel condition model which can be updated based on this feedback information.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1.  A telecommunication arrangement with a modem (MCO; MCPE) having a receiving module (URx; DRx) coupled to a controlling module (CCO; CCPE),
    said receiving module is adapted to receive at least one channel via a communication line (LN), said channel being adapted to transport data by means of signals with modulation having a bitload which is modifiable,
    said controlling module is adapted to modify the bitload used by said receiving module as a function of current measurements performed by the modem immediately prior to a current bitloading,
    **characterized in that** said controlling module (CCO; CCPE) is further adapted to also modify the bitload used by said receiving module (URx; DRx) as a function of a bitloading channel condition model (BCCMCO; BCCMCPE) that is independent of the current measurements.

2.  The telecommunication arrangement according to claim 1, **characterized in that** said bitloading channel condition model (BCCMCO; BCCMCPE) is a function of at least one measured bitloading channel condition model (UMCCM; DMCCM) previously obtained through measurements by said modem (MCO; MCPE).

3.  The telecommunication arrangement according to claim 2, **characterized in that** said measured bitloading channel condition model (UMCCM; DMCCM) is model of the noise level of said channel.

4.  The telecommunication arrangement according to claim 2, **characterized in that** said measured bitloading channel condition model (UMCCM; DMCCM) is model of the signal-to-noise ratio of said channel.

5.  The telecommunication arrangement according to claim 2, **characterized in that** said measured bitloading channel condition model (UMCCM; DMCCM) is model of the actual bitload of said channel.

6.  The telecommunication arrangement according to claim 2, **characterized in that** said measured bitloading channel condition model (UMCCM; DMCCM) is model of a mathematical function of at least one parameter of said channel.

7.  The telecommunication arrangement according to claim 2, **characterized in that** said measured bitloading channel condition model (UMCCM; DMCCM) is model of the "worst case" channel condition of at least one parameter of said channel.

8.  The telecommunication arrangement according to claim 1, **characterized in that** said bitloading channel condition model (BCCMCO; BCCMCPE) is a function of a first managed channel condition model (UMGCCM1; DMGCCM), which is a function of a second managed channel condition model (UMGCCM2; DMGCCMCO, DMGCCMCPE) that is transferred to the modem (MCO; MCPE) by a management device (MGCO; MGCPE) external to the modem.

9.  The telecommunication arrangement according to claim 8, **characterized in that** said second managed channel condition model (UMGCCM2; DMGCCMCO, DMGCCMCPE) is model of the noise level of said channel.

10. The telecommunication arrangement according to claim 8, **characterized in that** said second managed channel condition model (UMGCCM2; DMGCCMCO, DMGCCMCPE) is model of the signal-to-noise ratio of said channel.

11. The telecommunication arrangement according to claim 8, **characterized in that** said second managed channel condition model (UMGCCM2; DMGCCMCO, DMGCCMCPE) is model of the actual bitload for each carrier of modem using Multi Carrier Modulation (MCM).

12. The telecommunication arrangement according to claim 8, **characterized in that** said second managed channel condition model (UMGCCM2; DMGCCMCO, DMGCCMCPE) is model of the maximum allowed bitload for each carrier of modem using Multi Carrier Modulation (MCM).

13. The telecommunication arrangement according to claim 8, **characterized in that** said second managed channel condition model (UMGCCM2; DMGCCMCO, DMGCCMCPE) is model of a mathematical function of at least one parameter of said channel.

14. The telecommunication arrangement according to claim 8, **characterized in that** said second managed bitloading channel condition model (UMGCCM2; DMGCCMCO, DMGCCMCPE) is model of the "worst case" channel condition of at least one parameter of said channel.

15. The telecommunication arrangement according to the claims 2 and 8, **characterized in that** said controlling module (CCO; CCPE) comprises modem storage means (UMS; DMS) adapted to store said bitloading channel condition model (BCCMCO; BCCMCPE) as a function of said measured bitloading channel condition model (UMCCM; DMCCM) and as a function of said first managed channel condition model (UMGCCM1; DMGCCM).

16. The telecommunication arrangement according to claim 8, **characterized in that** said management device (MGCO; MGCPE) has management storage means (USN, DSN; LDN) adapted to store said second managed channel condition model (UMGCCM2, DMGCCMCO; DMGCCMCPE).

17. The telecommunication arrangement according to claim 1, **characterized in that** said bitloading channel condition model (BCCMCO; BCCMCPE) is updated during an initialization phase of the modem (MCO; MCPE).

18. The telecommunication arrangement according to claim 1, **characterized in that** said bitloading channel condition model (BCCMCO; BCCMCPE) is updated while user data is communicated.

19. The telecommunication arrangement according to claim 1, **characterized in that** said modulation is multi carrier modulation (MCM).

20. The telecommunication arrangement according to claim 1, **characterized in that** said modulation is single carrier modulation (SCM).

21. The telecommunication arrangement according to claim 1, **characterized in that** said modulation is baseband modulation (BBM).

22. The telecommunication arrangement according to claim 15,
    **characterized in that** the modem (MCO) is located at the Central Office (CO) part of the telecommunication arrangement,
    **in that** the receiving module of said modem is an upstream receiving module (URx) coupled to the controlling module (CCO) of said modem,
    and **in that** the modem storage means (UMS) of said controlling module (CCO) is adapted to store a bitloading channel condition model that is an upstream bitloading channel condition model (BCCMCO).

23. The telecommunication arrangement according to the claims 16 and 22,
    **characterized in that** the management device (MGCO) is also located at the Central Office (CO) part of the telecommunication arrangement and is coupled to said modem (MCO),
    and **in that** said management device (MGCO) has upstream management storage means (USN) adapted to store the second managed channel condition model that is a second upstream managed channel condition model (UMGCCM2).

24. The telecommunication arrangement according to claim 15,
    **characterized in that** the modem (MCPE) is located at the Customer Premises Equipment (CPE) part of the telecommunication arrangement,
    **in that** the receiving module of said modem is a downstream receiving module (DRx) coupled to the controlling module (CCPE) of said modem,
    and **in that** the modem storage means (DMS) of said controlling module (CCPE) is adapted to store a bitloading channel condition model that is a downstream bitloading channel condition model (BCCMCPE).

**25.** The telecommunication arrangement according to the claims 16 and 24,
**characterized in that** the management device (MGCPE) is also located at the Customer Premises Equipment (CPE) part of the telecommunication arrangement and is coupled to said modem (MCPE),
and **in that** said management device (MGCPE) has downstream management storage means (LDN) adapted to store the second managed channel condition model that is a second downstream managed channel condition model (DMGCCMCPE).

**26.** The telecommunication arrangement according to the claims 16 and 24,
**characterized in that** the management device (MGCO) is located at the Central Office (CO) part of the telecommunication arrangement and is coupled to said modem (MCPE) located at the Customer Premises Equipment (CPE) via said communication line (LN),
and **in that** said management device has downstream management storage means (DSN) adapted to store said second managed channel condition model that is a second downstream managed channel condition model (DMGCCMCO).

**27.** The telecommunication arrangement according to claim 26, **characterized in that** said controlling module (CCPE) of said modem (MCPE) is adapted to provide feedback information of the downstream bitloading channel condition model (BCCMCPE) stored in the modem storage means (DMS) to said management device (MGCO) via said communication line (LN).

**28.** The telecommunication arrangement according to claim 23, **characterized in that** said controlling module (CCO) of said modem (MCO) is adapted to provide feedback information of the upstream bitloading channel condition model (BCCMCO) stored in the modem storage means (UMS) to said management device (MGCO).

**29.** The telecommunication arrangement according to claim 1, **characterized in that** said modem is an adaptive Digital Subscriber Line (xDSL) modem.

**30.** The telecommunication arrangement according to claim 8, **characterized in that** said second managed channel condition model (UMGCCM2; DMGCCMCO, DMGCCMCPE) is transferred to the modem (MCO; MCPE) by the management device (MGCO; MGCPE) prior to the current bitloading.

Fig 1

**EP 1 569 402 A1**

**European Patent Office**

**EUROPEAN SEARCH REPORT**

Application Number

EP 04 29 0523

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99/20027 A (TZANNES MICHAEL A ; AWARE INC (US); GROSS RICHARD W (US); KRINSKY DAVI) 22 April 1999 (1999-04-22)<br>* page 7, line 10 - line 30 *<br>* page 10, line 10 - page 11, line 4 *<br>----- | 1-30 | H04L27/26 |
| X | US 2002/137467 A1 (TZANNES MARCOS C) 26 September 2002 (2002-09-26)<br>* paragraph [0075] - paragraph [0081] *<br>----- | 1-30 | |
| X | DE 101 12 816 A (SIEMENS AG) 26 September 2002 (2002-09-26)<br>* paragraph [0009] *<br>* paragraph [0029] - paragraph [0032] *<br>----- | 1-30 | |
| A | DE 101 47 951 A (SIEMENS AG) 20 March 2003 (2003-03-20)<br>* paragraph [0008] *<br>* paragraph [0011] *<br>* paragraph [0037] *<br>----- | 1-30 | |
| A | US 2003/095508 A1 (CORBATON IVAN JESUS FERNANDEZ ET AL) 22 May 2003 (2003-05-22)<br>* paragraph [0040] - paragraph [0059] *<br>----- | 1-30 | TECHNICAL FIELDS SEARCHED (Int.Cl.7)<br><br>H04L |

The present search report has been drawn up for all claims

| Place of search | Date of completion of the search | Examiner |
|---|---|---|
| Munich | 21 July 2004 | Agudo Cortada, E |

**ANNEX TO THE EUROPEAN SEARCH REPORT
ON EUROPEAN PATENT APPLICATION NO.**

EP 04 29 0523

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2004

| Patent document cited in search report | | Publication date | Patent family member(s) | | Publication date |
|---|---|---|---|---|---|
| WO 9920027 | A | 22-04-1999 | AU | 744756 B2 | 07-03-2002 |
| | | | AU | 1077699 A | 03-05-1999 |
| | | | AU | 763810 B2 | 31-07-2003 |
| | | | AU | 4583602 A | 25-07-2002 |
| | | | CA | 2306255 A1 | 22-04-1999 |
| | | | EP | 1021901 A2 | 26-07-2000 |
| | | | JP | 3436742 B2 | 18-08-2003 |
| | | | JP | 2001520487 T | 30-10-2001 |
| | | | JP | 2002280998 A | 27-09-2002 |
| | | | WO | 9920027 A2 | 22-04-1999 |
| | | | US | 6549520 B1 | 15-04-2003 |
| | | | US | 2004105465 A1 | 03-06-2004 |
| | | | US | 2004085987 A1 | 06-05-2004 |
| US 2002137467 | A1 | 26-09-2002 | US | 2003210739 A1 | 13-11-2003 |
| | | | CA | 2436858 A1 | 25-07-2002 |
| | | | EP | 1352490 A2 | 15-10-2003 |
| | | | WO | 02058310 A2 | 25-07-2002 |
| DE 10112816 | A | 26-09-2002 | DE | 10112816 A1 | 26-09-2002 |
| DE 10147951 | A | 20-03-2003 | DE | 10147951 A1 | 20-03-2003 |
| US 2003095508 | A1 | 22-05-2003 | US | 2003095506 A1 | 22-05-2003 |
| | | | WO | 03047198 A2 | 05-06-2003 |
| | | | WO | 03047197 A2 | 05-06-2003 |

EPO FORM P0459

For more details about this annex : see Official Journal of the European Patent Office, No. 12/82